# EUROPÄISCHE PATENTSCHRIFT

(11) **EP 0 316 566 B1**
(45) Veröffentlichungstag und Bekanntmachung des Hinweises auf die Patenterteilung: **26.05.1993**
(21) Anmeldenummer: 88116729.0
(22) Anmeldetag: 08.10.1988
(51) Int. Cl.: G11B 15/467, G11B 5/588

(54) **Verfahren zur Gewinnung eines Regelsignals für eine automatische Spurnachführung**
Method for the acquisition of a control signal for automatic track following
Procédé pour l'acquisition d'un signal de régulation pour un suivi de piste automatique

(30) Priorität: 13.11.1987 DE 3738612
(43) Veröffentlichungstag der Anmeldung: 24.05.1989
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Elsässer, Dieter GRUNDIG E.M.V., Kurgartenstrasse 37 D-8510 Fürth/Bay (DE)

(56) Entgegenhaltungen:
- EP-A- 0 087 811
- EP-A- 0 219 303
- GB-A- 2 092 813
- US-A- 4 437 116
- US-A- 4 587 580
- PATENT ABSTRACTS OF JAPAN vol. 9, no. 120 (P-358) 24 Mai 1985, & JP-A-60 5412

## Beschreibung

Die Erfindung betrifft ein Verfahren der im Oberbegriff des Anspruchs 1 angegebenen Art.

Aus der deutschen Offenlegungsschrift 35 41 272 ist ein derartiges Verfahren für ein Aufzeichnungsgerät mit rotierenden Magnetköpfen bekannt. Dort wird während der Aufzeichnung in einer Gruppe von jeweils drei Spuren in Spurabschnitten ein Steuer- oder Pilotsignal aufgezeichnet, wobei jeweils die mittlere Spur ohne Pilotsignal bleibt. Um ein Übersprechen des Pilotsignals in das aufgezeichnete Nutzsignal zu vermeiden, kann das Pilotsignal entweder durch niedrige Frequenzen realisiert, oder durch eine spezielle Tiefenmodulation aufgezeichnet werden. Bei der Wiedergabe werden die Spuren von den rotierenden Magnetköpfen abgetastet, wobei sich beim Abtasten der Spuren ohne Pilotsignal je nach Lage des Magnetkopfes zur Spur unterschiedliche Amplituden der aus den benachbarten Spuren
übersprechenden Pilotsignalanteile ergeben. Diese übersprechenden Pilotsignalanteile werden in ihren Amplituden verglichen und resultierend aus den Amplitudendifferenzen wird eine Regelspannung erzeugt, die zur Nachsteuerung des Servosystems für die Spurnachführung dient.

Bei einem ähnlichen Verfahren zur Gewinnung eines Regelsignals für die automatische Spurnachführung beim Wiedergabebetrieb eines magnetischen Aufzeichnungsgerätes mit rotierenden Magnetköpfen werden in einer abzutastenden Spur zusätliche Synchronisiersignale ausgewertet, die die Zeitpunkte festlegen, zu denen das Übersprechen der in den jeweiligen Nachbarspuren aufgezeichneten Pilotsignale gemessen werden muß. So wird z. B. nach dem Abtasten eines ersten Synchronisiersignals in einer Spur der Signalpegel eines übersprechenden Pilotsignals der jeweils vorausgehenden Spur gemessen und nach dem Abtasten eines zweiten Synchronisiersignals in der gleichen Spur der Signalpegel eines übersprechenden Pilotsignals der jeweils nachfolgenden Spur. Auch bei diesem Verfahren wird anschließend die Differenz der gemessenen Übersprechanteile gebildet, um ein Regelsignal zu erhalten.

Der entscheidende Nachteil der bakannten Verfahren liegt nun darin, daß das Regelsignal aus der Differenz der übersprechenden Pilotsignalanteile gewonnen wird. Diese Differenzbildung führt bei Schwankungen der abgetasteten Pilotsignalamplituden, die geräteabhängig durch unterschiedliche Toleranzen beim Aufnahme-/Wiedergabevorgang und/oder bandabhängig durch Empfindlichkeitstoleranzen auftreten können, zu fehlerhaften Korrektur- oder Regelspannungen. Werden beispielsweise bei einem ersten Gerät bei einer bestimmten Spurabweichung die normierten Übersprechpegel P₁₁ = 4 und P₁₂ =2 und bei einem zweiten Gerät bei gleicher Spurabweichung die normierten Übersprechpegel P₂₁ = 2 und P₂₂ = 1 gemessen, so ergibt sich für das Regelsignal im ersten Fall ein normierter Wert von 2, während sich im zweiten Fall ein normierter Wert von 1 ergibt. Die Regel- oder Korrekturspannung ist also bei gleicher Spurabweichung der betrachteten Geräte um den Faktor 2 verschieden. Dies wirkt sich im Regelkreis wie eine Änderung der Regelverstärkung aus, was zur Verschlechterung des Regelverhaltens führt.

Der Erfindung liegt die Aufgabe zugrunde, ein Verfahen der im Oberbegriff des Anspruchs 1 angegebenen Art so auszubilden, daß geräte- oder bandbedingte Amplitudenschwankungen bei der Pilotsignalabtastung bzw. bei der Abtastung und Messung der jeweiligen Übersprechanteile keinen Einfluß auf das Regelverhalten der Spurnachführung haben.

Diese Aufgabe wird gemäß der Erfindung durch die im Kennzeichen des Patentanspruchs 1 angegebenen Maßnahmen gelöst. Eine vorteilhafte Weiterbildung der Erfindung ist im Anspruch 2 gekennzeichnet.

Bei dem Verfahren gemäß der Erfindung werden die beim Abtasten einer Spur gemessenen Übersprechpegel der in den Nachbarspuren aufgezeichneten Pilotsignale nicht voneinander subtrahiert, sondern zueinander ins Verhältnis gesetzt. Aus der positiven oder negativen Abweichung des hierbei erhaltenen Quotienten von dem Wert "Eins" werden dann Vorzeichen und Größe des Regelsignals ermittelt. Ein Quotient mit dem Wert "Eins: ergibt sich genau dann, wenn beide Übersprechanteile aus den Nachbarspuren gleich sind, das heißt, wenn sich der abtastende Magnetkopf genau auf der abzutastenden Spur bewegt. Für des Regelsignal ergibt sich in diesem Fall der Wert "Null", da die Abweichung des Quotienten aus den Übersprechanteilen zu dem Wert "Eins" "Null" ist.

Durch die Quotientenbildung wird in vorteilhafter Weise der Einfluß von geräte- oder bandbedingten Amplitudenschwankungen bei der Abtastung und Messung der jeweiligen Übersprechanteile auf das Regelsignal ausgeschaltet. Werden also - wie im obigen Beispiel - bei einem ersten Gerät bei einer bestimmten Spurabweichung die normierten Übersprechpegel P₁₁ = 4 und P₁₂ = 2 und bei einem zweiten Gerät bei gleicher Spurabweichung die normierten Übersprechpegel P₂₁ = 2 und P₂₂ = 1 gemessen, so ergibt sich nunmehr für das Regelsignal in beiden Fällen die gleiche Größe, da die Quotienten P₁₁/P₁₂ und P₂₁/P₂₂ gleich sind.

Eine vorteilhafte Weiterbildung des Verfahrens gemäß der Erfindung besteht darin, daß die gemessenen Übersprechpegel analog/digital gewandelt werden, um die Quotientenbildung in einfacher Weise mit digitalen Mitteln durchführen zu können. Anschließend wird das Ergebnis der Division zur Gewinnung eines analogen Regelsignals wieder digital/analog gewandelt.

## Patentansprüche

1. Verfahren zur Gewinnung eines Regelsignals für eine automatische Spurnachführung beim Wiedergabebetrieb eines magnetischen Aufzeichnungsgerätes mit rotierenden Magnetköpfen, bei dem bei der Wiedergabe von parallel aufgezeichneten Spuren jeweils nach dem Abtasten eines ersten Synchronisiersignals in einer Spur der Signalpegel eines übersprechenden Pilotsignals der jeweils vorausgehenden Spur gemessen wird, und bei dem jeweils nach dem Abtasten eines zweiten Synchronsiersignals in der gleichen Spur der Signalpegel eines übersprechenden Pilotsignals der jeweils nachfolgenden Spur gemessen wird, **dadurch gekennzeichnet,** daß die beiden gemessenen Übersprechpegel zueinander ins Verhältnis gesetzt werden, und daß aus der positiven oder negativen Abweichung des gebildeten Quotienten von dem Wert "Eins" das Vorzeichen und die Größe des Regelsignals ermittelt werden.

2. Verfahren nach Anspruch 1, **dadurch gekennzeichnet,** daß die gemessenen Übersprechpegel analog/digital gewandelt werden, daß die Quotientenbildung mit digitalen Mitteln durchgeführt wird, und daß das Ergebnis der Division zur Gewinnung eines analogen Regelsignals digital/analog gewandelt wird.

## Claims

1. Method for obtaining a control signal for automatic tracking in replay mode of a magnetic recording device having rotating magnetic heads, in which, during the replaying of tracks recorded in parallel, the signal level of a pilot signal feeding across from the in each case preceding track is measured in each case after the scanning of a first synchronising signal in one track, and in which the signal level of a pilot signal feeding across from the in each case following track is measured in each case after the scanning of a second synchronising signal in the same track, characterised in that the two measured crosstalk levels are placed in a ratio with respect to one another and in that the sign and the quantity of the control signal are determined from the positive or negative deviation from the value "one" of the quotient formed.

2. Method according to Claim 1, characterised in that the measured crosstalk levels are analog/digital-converted, in that the forming of a quotient is carried out by digital means and in that the result of the division is digital/analog-converted in order to obtain an analog control signal.

## Revendications

1. Procédé pour obtenir un signal de régulation pour un asservissement automatique de piste lors de l'opération de lecture dans un appareil d'enregistrement magnétique comportant des têtes magnétiques rotatives, selon lequel lors de la lecture de pistes enregistrées en parallèle, respectivement après l'exploration d'un premier signal de synchronisation dans une piste, le niveau d'un signal pilote réalisant une diaphonie de la piste respectivement précédente est mesuré et selon lequel respectivement après l'exploration d'un second signal de synchronisation dans la même piste, le niveau d'un signal pilote réalisant une diaphonie de la piste respectivement suivante est mesuré, caractérisé en ce qu'on forme le rapport des deux niveaux mesurés de diaphonie et qu'à partir de l'écart positif ou négatif du quotient formé par rapport à la valeur "un", on détermine le signe et l'amplitude du signal de régulation.

2. Procédé selon la revendication 1, caractérisé en ce que les niveaux mesurés de diaphonie sont soumis à une conversion analogique/numérique, que la formation du quotient est exécutée avec des moyens numériques et que le résultat de la division pour l'obtention d'un signal de régulation analogique est converti au moyen d'une conversion numérique/analogique.
